# EUROPEAN PATENT SPECIFICATION

(11) **EP 1 300 558 B1**
(45) Date of publication and mention of the grant of the patent: **09.03.2005**
(21) Application number: 01308498.3
(22) Date of filing: 04.10.2001
(51) Int. Cl.: F02B 33/32, F01N 3/32, F01N 3/22

(54) **Internal combustion engine with catalytic converter**
Verbrennungskraftmaschine mit Katalysator
Moteur à combustion interne comprenant un pot catalytique

(43) Date of publication of application: 09.04.2003
(73) Proprietor: Visteon Global Technologies, Inc., Dearborn, Michigan 48126-2490 (US)
(72) Inventor: Criddle, Mark Anderton, Chelmsford, Essex CM2 9TY (GB)
(74) Representative: McLean, Robert Andreas

(56) References cited:
- US-A- 5 427 079
- US-A- 5 974 792
- US-B1- 6 227 180
- US-B1- 6 293 241
- PATENT ABSTRACTS OF JAPAN vol. 2000, no. 11, 3 January 2001 (2001-01-03) & JP 2000 230427 A (DENSO CORP;NIPPON SOKEN INC), 22 August 2000 (2000-08-22)

## Description

The present invention relates to an internal combustion engine having a catalytic converter to reduce exhaust gas emissions.

Catalytic converters, such as three-way catalysts used in motor vehicle, can reduce significantly the exhaust gas emissions from an internal combustion engine. Such converters are designed to operate most efficiently within a range of temperatures. If the temperature of the catalyst is too low, then the conversion efficiency of exhaust gas by-products such as unburned hydrocarbon, carbon monoxide or nitrogen oxides, will be low. On the other hand, if the catalyst gets too hot, then this can damage the catalyst matrix, which permanently reduces the efficiency and the lifetime of the converter.

In order to promote quicker "light off" of the catalytic converter during cold start conditions, it is known to provide a secondary air system, which pumps fresh air into the exhaust system upstream of the converter. This excess air allows unburned fuel during initial rich operation of the engine to ignite in the exhaust system and catalyst area, thus promoting quicker catalyst light off.

A typical secondary air system for motor vehicle catalyst light off includes an under hood secondary air pump and associated pipe work to feed fresh air into the exhaust system. The pump is electrically powered from the vehicle battery, and usually operates for the first two minutes following a cold start of the engine, after which time it is not used.

Such a secondary air supply system is expensive, bulky and difficult to package under the hood of a typical motor vehicle, which is typically crowded with components and ducting. This makes this approach less attractive than some other known techniques which can be used to achieve quicker catalyst light off.

One example of a prior art secondary air supply system is disclosed in US 5,974,792, in which a mechanically driven pressure charging device is provided for pressurising air supplied to combustion chambers. The pressure charging device also supplies secondary air to an exhaust gas system upstream of a catalytic converter in order to facilitate catalyst light off. The pressure charging device is located downstream of a throttle in an air inlet.

Prior art document JP 2000 230 437 A discloses a pressure charging system for an internal combustion engine in which the pressure charging device may be electrically powered.

It is an object of the present invention to provide a more convenient secondary air supply system for motor vehicle catalyst light off.

According to the invention, there is provided an engine comprising one or more internal combustion chambers, an air supply system for aspirating the combustion chambers, an exhaust gas system for carrying away exhaust gas from the combustion chambers, an exhaust gas recirculation system for recirculating exhaust gas back to the combustion chambers, and a secondary air supply system between the air supply system and the exhaust gas system, wherein:
the exhaust gas system includes a catalytic converter for reducing engine emissions;
the air supply system includes a pressure charging device for pressurising air supplied to the combustion chambers;
the secondary air supply system provides a secondary air supply path for air pressurised by the pressure charging device to flow from the air supply system downstream of the pressure charging device to the exhaust gas system upstream of the catalytic converter in order to facilitate catalyst light off;
the exhaust gas recirculation system provides an exhaust gas recirculation path for exhaust gas to flow from the exhaust gas system to the air supply system when pressurised air is not flowing through the secondary air supply path;
the engine comprises a throttle in the air supply system for controlling aspiration of the combustion chambers;
the engine comprises a diverter valve that can be activated to permit said pressurised air to flow along the secondary air supply path or alternatively to permit exhaust gas to flow along the exhaust gas recirculation path;
characterised in that
the throttle is downstream of the pressure charging device;
the secondary air supply path joins the air supply system between the pressure charging device and the throttle; and
the exhaust gas recirculation path joins the air supply system downstream of the throttle.

It is known to provide such a pressure charging device, for example a turbocharger, or an electrically driven supercharger, to assist engine aspiration and so boost engine torque beyond that available with natural aspiration alone. The invention therefore takes advantage of such a source of pressurised air to provide secondary air to the exhaust gas system. Since by far the major part of the cost involved in the provision of a secondary air system is the air pump and associated control electronics, the invention therefore allows a significant cost savings with engines used such a pressure charging device. There will also be a savings in the volume of components needed to provide a secondary air supply path.

The engine may include an electronic control system for controlling engine operation. Such an engine control system may receive electronic input from a number of engine condition sensors, calculate with a microprocessor a number desired engine operating parameters and then provide a number of control outputs to other electronic units involved in the function of the engine. In particular, the engine control system preferably controls the operation of the pressure charging device, and the flow of secondary air in the secondary air supply path, for example by control of an electronically controlled valve.

In a preferred embodiment of the engine, a portion of the secondary air supply system provides an exhaust gas recirculation path for exhaust gas to flow from the exhaust gas system to the air supply system when pressurised air is not flowing through the secondary air supply path from the air supply system to the exhaust gas system. Such exhaust gas recirculation is often needed as a part of an emissions control system. This permits a further reduction in the number of conduits required, as at least a part of the secondary air path can be used for exhaust gas recirculation when secondary air is not needed. The invention therefore offers the possibility of a significant space savings under the hood of a motor vehicle.

When the throttle is at a setting other than wide open, there will be a pressure drop downstream of the throttle. Because of this, it is convenient if the exhaust gas recirculation path joins the air supply path downstream of the throttle. Exhaust gas can then flow more readily from a higher pressure within the exhaust gas system to a lower pressure within the air supply system.

For the same reason, the secondary air supply system receives air from the air supply system upstream of the throttle when the secondary air supply system supplies air to the exhaust gas system for catalyst light off. The pressure charging device can then be run at a sufficient rate to pressurise the air upstream of the throttle sufficiently so that air flows into the relatively lower pressure exhaust gas system. If necessary, the throttle opening can be restricted in order to limit the flow of pressurised air towards the combustion chambers when the torque boost that would otherwise be provided by the pressure charging device is not desired or required in full.

The secondary air supply system includes a diverter valve that can be activated to permit either secondary air to flow from the air supply system to the exhaust gas system or alternatively permit exhaust gas to flow from the exhaust gas system to the air supply system. The diverter valve may be an electronic valve under the control of the engine control system.

Also according to the invention, there is provided a method of operating an engine, said engine comprising one or more internal combustion chambers, an air supply system including a pressure charging device for aspirating the combustion chambers, an exhaust gas system including a catalytic converter for reducing engine emissions, a secondary air supply system between the air supply system and the exhaust gas system, a throttle in the air supply system for controlling aspiration of the combustion chambers, and a diverter valve, wherein the method comprises the steps of:
i) using the exhaust gas system to carry exhaust gas away from the combustion chambers and through the catalytic converter;
ii) using the pressure charging device to pressurise air supplied to the combustion chambers by the air supply system;
iii) using the diverter valve to allow pressurised air from the air supply system to flow into the exhaust gas system upstream of the catalytic converter in order to facilitate catalyst light off and at another time using the diverter valve to allow exhaust gas to flow from the exhaust gas system to the air supply system;
wherein the engine comprises a throttle in the air supply system for controlling aspiration of the combustion chambers, the throttle being downstream of the pressure charging device, and characterised in that in step iii) said pressurised air leaves the air supply system between the pressure charging device and the throttle and in that said exhaust gas from the exhaust gas system flows into the air supply system downstream of the throttle.

The invention will now be described in further detail, and by way of example only, with reference to the accompanying drawing, in which:

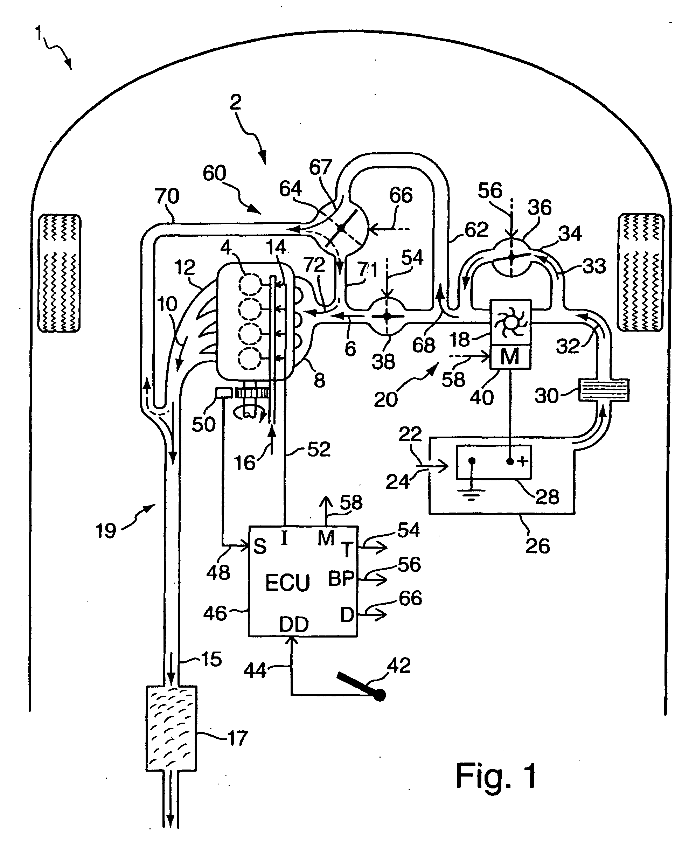

Figure 1 shows a schematic diagram of a motor vehicle having an internal combustion engine according to the invention.

Figure 1 shows schematically part of a motor vehicle 1 having a reciprocating piston internal combustion engine 2 having four in-line combustion chambers 4. Air 6 enters the combustion chambers 4 via an inlet manifold 8, and exhaust gases 10 leave the combustion chambers 4 via an exhaust manifold 12. A fuel injection system 14 supplies fuel 16 to the combustion chambers 4 in a manner well-known in the art.

An exhaust conduit 15 leads from the exhaust manifold 12 towards a catalytic converter 17, which together with the exhaust manifold 12 comprise an exhaust gas system 19.

A pressure charging device, here an electrically driven supercharger 18, is provided upstream of the inlet manifold 8 as part of an air supply system 20. Unpressurised air 22 enters the air supply system 20 via an air inlet 24 into an enclosure 26 that surrounds a 12-volt lead/acid vehicle battery 28. An air filter 30 upstream of the supercharger 18 ensures that all air entering the supercharger is clean.

When the supercharger 18 is disabled or idling, filtered air 32 can bypass 33 the supercharger through an air bypass conduit 34.

The air bypass conduit 34 has an air valve 36 that automatically opens (as shown in a solid line) when the air pressure downstream of the supercharger 18 is less than air pressure upstream of the supercharger. The bypass valve 36 then automatically closes (as shown in a dashed line) when the converse is the case.

Air supply 6 to the combustion chambers 4 is then controlled by the setting of an electronically controlled throttle valve 38 downstream of the supercharger 18 and bypass 34, and by the activation of the supercharger 18. When the supercharger 18 is not activated, the combustion chambers 4 are normally aspirated, and when the supercharger 18 is activated, the airflow 6 to the combustion chambers 4 is increased.

The supercharger 18 is driven only by a switched reluctance electrical motor (M) 40 powered by the battery 28.

The vehicle driver (not shown) can control the engine power via a movable accelerator pedal assembly 42, that provides an electrical signal 44 to an engine control unit (ECU) 46 indicative of a driver demand (DD).

The engine control unit 46 also receives inputs of other engine operating parameters, for example an engine speed signal (S) 48 from an engine speed sensor 50.

The engine control unit 46 also generates a number of engine control signals, including: a fuel injection control signal (I) 52 for controlling the fuel injection system 14, a throttle control signal (T) 54 for controlling the electronic throttle 38, and a supercharger motor (SCM) control signal 58 for controlling the supercharger motor 40.

Optionally, the engine control unit may generate a bypass valve control signal (BP) 56, if the bypass valve 36 is electrically actuable. It is possible, however, for the bypass valve 36 to be a passive valve operated by a pressure difference across the supercharger 18, so that the valve automatically opens if the pressure downstream of the supercharger is less than the pressure upstream of the supercharger 18.

The engine 2 includes a secondary air supply system 60 between the air supply system 2 and the exhaust gas system 19. The secondary air supply system 60 is connected to the air supply system by a conduit 62 for admitting secondary air at a point which is downstream of the supercharger 18, and upstream of the electronic throttle valve 38. The conduit leads to an electronic diverter valve 64, the operation of which is controlled by the electronic control unit 46 by a diverter valve control signal (D) 66. When the diverter valve is set as shown by the solid line, pressurised air 68 entering the conduit 62 passes through 67 the diverter valve 64 into a conduit 70 connecting with the exhaust gas conduit 15. This allows a flow of so-called secondary air into the exhaust conduit 15 to facilitate catalyst light off in cold start conditions.

When the diverter valve 64 is set in an alternative setting, as shown by the dashed line, the conduit 62 for admitting air into the secondary air supply system 60 is blocked off by the diverter valve 64.

As shown in the drawing, another conduit 71 is connected between the secondary air supply system 60 and the air supply system 20, downstream of the throttle valve 38 and upstream of the inlet manifold 8. The other end of this conduit 71 connects with the diverter valve 64, not so that pressurised secondary air may enter the exhaust gas system 19, but so that exhaust gas 72 can flow from the exhaust conduit 15 into the inlet manifold 8 when the diverter valve 64 is set as shown by the dashed line. This recirculated exhaust gas helps to control engine emissions when the engine is running at its operating temperature. Such exhaust gas recirculation can also help to reduce pumping losses, thus improving fuel economy.

The exhaust gas recirculation 72 and the secondary air supply 67 are required during different phases of engine operation. The arrangement is therefore economical in terms of the amount and cost of hardware needed to implement both the secondary air supply and the exhaust gas recirculation system.

By careful control of the amount of pressurised air, and the throttle setting, it is possible for the electrically driven supercharger to provide a secondary air supply to the exhaust conduit 15 and catalytic converter 17 through the conduit 62,70 and diverter valve 64. This eliminates the need for a dedicated secondary air supply pump in engine systems that already enjoy the benefit of torque boost from a pressure boosting device. Once the catalyst light off has been achieved, a portion of the secondary air supply system changes role to become in effect a gas recirculation system as part of the engine emissions control strategy. Again, by avoiding the need for a dedicated gas recirculation system, the invention help to save space and reduce the overall system cost for the engine.

Although a preferred embodiment of the invention has been described with reference to an electrically driven supercharger, it would also be possible to use an electrically assisted turbocharger, or even a mechanically driven supercharger, although the latter would entail a more complicated mechanical arrangement powered via a suitable linkage from the reciprocating pistons.

The invention therefore provides a compact and economical arrangement for provided a secondary air supply to facilitate catalyst light off.

## Claims

1. An engine (2), comprising one or more internal combustion chambers (4), an air supply system (20) for aspirating the combustion chambers (4), an exhaust gas system (19) for carrying away exhaust gas (10) from the combustion chambers (4), an exhaust gas recirculation system for recirculating exhaust gas back to the combustion chambers (4), and a secondary air supply system (60) between the air supply system (20) and the exhaust gas system (19), wherein:
the exhaust gas system (19) includes a catalytic converter (17) for reducing engine emissions;
the air supply system (20) includes a pressure charging device (18) for pressurising air supplied (6) to the combustion chambers (4);
the secondary air supply system (60) provides a secondary air supply path (62,70) for air (68) pressurised by the pressure charging device (18) to flow from the air supply system (20) downstream of the pressure charging device (18) to the exhaust gas system (19) upstream of the catalytic converter (17) in order to facilitate catalyst light off;
the exhaust gas recirculation system provides an exhaust gas recirculation path (70,71) for exhaust gas (72) to flow from the exhaust gas system (19) to the air supply system (20) when pressurised air (68) is not flowing through the secondary air supply path (62,70);
the engine (2) comprises a throttle (38) in the air supply system (20) for controlling aspiration of the combustion chambers (4);
the exhaust gas recirculation path (70,71) joins the air supply system (20) downstream of the throttle (38);
the engine (2) comprises a diverter valve (64) that can be activated to permit said pressurised air (68) to flow (67) along the secondary air supply path (62,70) or alternatively to permit exhaust gas (72) to flow along the exhaust gas recirculation path (70,71);
**characterised in that**
the throttle (38) is downstream of the pressure charging device (18);
the secondary air supply path (62,70) joins the air supply system (20) between the pressure charging device (18) and the throttle (38).

2. An engine (2) as claimed in Claim 1, in which the diverter valve (64) is an electronically controlled valve, and the engine (2) includes an electronic control system (46) arranged to control said valve (64) in order to control the flow (67) of pressurised air (68) from the air supply system (20) to the exhaust gas system (19).

3. An engine (2) as claimed in Claim 1 or Claim 2, in which a portion of the secondary air supply system (60) provides the exhaust gas recirculation path (70,71) for exhaust gas (72) to flow from the exhaust gas system (19) to the air supply system (20) when pressurised air (68) is not flowing through the secondary air supply system (60) from the air supply system (20) to the exhaust gas system (19).

4. An engine (2) as claimed in any preceding claim, in which the throttle is an electronic throttle (38) under the control of an electronic engine control system (46).

5. An engine (2) as claimed in any preceding claim, in which the pressure charging device is an electrically driven supercharger (18).

6. A method of operating an engine (2), said engine (2) comprising one or more internal combustion chambers (4), an air supply system (20) including a pressure charging device (18) for aspirating the combustion chambers (4), an exhaust gas system (19) including a catalytic converter (17) for reducing engine emissions, a secondary air supply system (60) between the air supply system (20) and the exhaust gas system (19), a throttle (38) in the air supply system (20) for controlling aspiration of the combustion chambers (4), and a diverter valve (64), wherein the method comprises the steps of:
i) using the exhaust gas system (19) to carry exhaust gas (10) away from the combustion chambers (4) and through the catalytic converter (17);
ii) using the pressure charging device (18) to pressurise air supplied (6) to the combustion chambers (4) by the air supply system (20);
iii) using the diverter valve (64) to allow pressurised air (68) from the air supply system (20) to flow (67) into the exhaust gas system (19) upstream of the catalytic converter (17) in order to facilitate catalyst light off and at another time using the diverter valve (64) to allow exhaust gas (72) to flow from the exhaust gas system (19) to the air supply system (20);
wherein the engine (2) comprises a throttle (38) in the air supply system (20) for controlling aspiration of the combustion chambers (4), the throttle (38) being downstream of the pressure charging device (18), and **characterised in that** in step iii) said pressurised air leaves the air supply system between the pressure charging device (18) and the throttle (38) and **in that** said exhaust gas (72) from the exhaust gas system flows into the air supply system (20) downstream of the throttle (38).

## Patentansprüche

1. Ein Motor (2), der eine oder mehrere Verbrennungskammern (4) umfaßt; ein Luftversorgungssystem (20), um in die Verbrennungskammern (4) anzusaugen; ein Abgassystem (19), um Abgas (10) von den Verbrennungskammern (4) weg zu transportieren; ein Abgas-Rückführungssystem, um Abgas zu den Verbrennungskammern (4) zurückzuführen; und ein Sekundärluft-Versorgungssystem (60) zwischen dem Luftversorgungssystem (20) und dem Abgassystem (19), in dem:
das Abgassystem (19) einen Katalysator (17) umfaßt, um Motoremissionen zu vermindern;
das Luftversorgungssystem (20) eine Druck-Aufladevorrichtung (18) umfaßt, um zu den Verbrennungskammern (4) gelieferte Luft (6) mit Druck zu beaufschlagen;
das Sekundärluft-Versorgungssystem (20) einen sekundären Luftversorgungsweg (62, 70) für Luft (68) bereitstellt, die durch die Druck-Aufladevorrichtung (18) mit Druck beaufschlagt ist, um von dem Luftversorgungssystem (20) stromabwärts der Druck-Aufladevorrichtung (18) zu dem Abgassystem (19) stromaufwärts des Katalysators (17) zu strömen, um eine Katalysatorzündung zu fördern;
das Abgas-Rückführungssystem einen Abgas-Rückführungsweg (70, 71) für Abgas (72) bereitstellt, um von dem Abgassystem (19) zu dem Luftversorgungssystem (20) zu strömen, wenn keine druckbeaufschlagte Luft (68) durch den Sekundärluft-Versorgungsweg (62, 70) strömt;
der Motor (2) eine Drossel (38) in dem Luftversorgungssystem (20) umfaßt, um das Ansaugen der Verbrennungskammern (4) zu regeln;
der Abgasrückführungsweg (70, 71) stromabwärts der Drossel (38) auf das Luftversorgungssystem (20) trifft;
der Motor (2) ein Umlenkventil (64) umfaßt, das aktiviert werden kann um es dieser druckbeaufschlagten Luft (68) zu erlauben entlang des sekundären Luftversorgungsweges (62, 70) zu strömen; oder um es dem Abgas (72) alternativ zu erlauben entlang des Abgasrückführungsweges (70, 71) zu strömen;
**dadurch gekennzeichnet, daß**
die Drossel (38) sich stromabwärts der Druck-Aufladevorrichtung (18) befindet; und
der Sekundärluft-Versorgungsweg (62, 70) zwischen der Druck-Aufladevorrichtung (18) und der Drossel (38) auf das Luftversorgungssystem (20) trifft.

2. Ein Motor (2) wie in Anspruch 1 beansprucht, in welchem das Umlenkventil (64) ein elektronisch geregeltes Ventil ist, und der Motor (2) ein elektronisches Regelsystem (46) einschließt, das eingerichtet ist um dieses Ventil (64) zu regeln, um den Strom (67) druckbeaufschlagter Luft (68) von dem Luftversorgungssystem (20) zu dem Abgassystem (19) zu regeln.

3. Ein Motor (2) wie in Anspruch 1 oder Anspruch 2 beansprucht, in welchem ein Teil des Sekundärluft-Versorgungssystems (60) den Abgasrückführungs-Weg (70, 71) bereitstellt, damit Abgas (72) von dem Abgassystem (19) zu dem Luftversorgungssystem (20) strömt, wenn keine druckbeaufschlagte Luft (68) durch das Sekundärluft-Versorgungssystem (60) von dem Luftversorgungssystem (20) zu dem Abgassystem (19) strömt.

4. Ein Motor (2) wie in irgendeinem der vorstehenden Ansprüche beansprucht, in welchem die Drossel eine elektronische Drossel (38) unter der Regelung eines elektronischen Motor-Regelsystems (46) ist.

5. Ein Motor (2) wie in irgendeinem der vorstehenden Ansprüche beansprucht, in welchem die Druck-Aufladevorrichtung ein elektrisch angetriebenes Aufladegerät (18) ist.

6. Ein Verfahren zum Betrieb eines Motors (2), wobei dieser Motor (2) eine oder mehrere Verbrennungskammern (4) umfaßt; ein Luftversorgungssystem (20) einschließlich einer Druck-Aufladevorrichtung (18), um die Verbrennungskammern (4) zu füllen oder aufzusaugen; ein Abgassystem (19) einschließlich eines Katalysators (17), um Motoremissionen zu vermindern; ein Sekundärluft-Versorgungssystem (60) zwischen dem Luftversorgungs-System (20) und dem Abgassystem (19); eine Drossel (38) in dem Luftversorgungssystem (20), um die Ansaugung der Verbrennungskammern (4) zu regeln; und ein Umlenkventil (64); wobei das Verfahren die Schritte umfaßt:
i) Benutzen des Abgassystems (19), um Abgas (10) von der Verbrennungskammer (4) weg und durch den Katalysator (17) hindurch zu befördern;
ii) Benutzen der Druck-Aufladevorrichtung (18), um durch das Luftversorgungssystem (20) zu den Verbrennungskammern (4) gelieferte Luft (6) mit Druck zu beaufschlagen;
iii) Benutzen des Umlenkventils (64), um es druckbeaufschlagter Luft (68) von dem Luftversorgungssystem (20) zu gestatten stromaufwärts des Katalysators (17) in das Abgassystem (19) einzuströmen (67), um Katalysatorzündung zu erleichtern; und zu einer anderen Zeit Benutzen des Umlenkventils (64), um es Abgas (72) zu gestatten von dem Abgassystem (19) zu dem Luftversorgungssystem (20) zu strömen;
worin der Motor (2) eine Drossel (38) in dem Luftversorgungssystem (20) umfaßt, um die Ansaugung der Verbrennungskammern (4) zu regeln, und sich die Drossel (38) stromabwärts der Druck-Aufladevorrichtung(18) befindet; und **dadurch gekennzeichnet, daß** in Schritt iii) diese druckbeaufschlagte Luft dieses Luftversorgungssystem zwischen der Druck-Aufladevorrichtung (18) und der Drossel (38) verläßt; und dadurch, daß dieses Abgas (72) von dem Abgassystem stromabwärts der Drossel (38) in das Luftversorgungssystem (20) strömt.

## Revendications

1. Un moteur (2), comprenant une ou davantage de chambres de combustion (4), un dispositif de fourniture d'air (20) pour aspirer les chambres de combustion (4), un dispositif d'échappement des gaz (19) pour transporter les gaz d'échappement à l'écart des chambres de combustion (4), un dispositif de re-circulation des gaz d'échappement pour re-circuler les gaz d'échappement en retour aux chambres de combustion (4), et un dispositif de fourniture d'air secondaire (60) disposé entre le dispositif de fourniture d'air (20) et le dispositif d'échappement des gaz (19), dans lequel :
le dispositif d'échappement des gaz (19) comprend un convertisseur catalytique (17) pour réduire les émissions du moteur ;
le dispositif de fourniture d'air (20) comprend un dispositif de pressurisation (18) pour pressuriser l'air fourni (6) aux chambres de combustion (4) ;
le dispositif de fourniture d'air secondaire (60) fournit un cheminement secondaire de fourniture d'air (62, 70) pour que l'air (6) pressurisé par le dispositif de pressurisation (18) s'écoule depuis le dispositif de fourniture d'air (26) en aval du dispositif de pressurisation (18) jusqu'au afin de dispositif d'échappement des gaz (19) en amont du convertisseur catalytique (17) afin de faciliter l'allumage catalytique ;
le dispositif de re-circulation des gaz d'échappement fournit un cheminement de re-circulation des gaz d'échappement (70, 71) pour que les gaz d'échappement (72) s'écoulent depuis le dispositif d'échappement des gaz (19) jusqu'au dispositif de fourniture d'air (20) lorsque l'air pressurisé (68) ne s'écoule pas au travers du cheminement secondaire de fourniture d'air (62, 70) ;
le moteur (2) comprend une vanne d'étranglement ou accélérateur (38) dans le dispositif de fourniture d'air (20) pour réguler l'aspiration des chambres de combustion (4) ;
le cheminement de re-circulation des gaz d'échappement (70, 71) joint le dispositif de fourniture d'air (20) en aval de l'accélérateur ou de la vanne d'étranglement (38) ;
le moteur (2) comprend une soupape de diversion (64) qui peut être activée pour permettre audit air pressurisé (68) de s'écouler (67) le long du cheminement secondaire de fourniture d'air (62, 70) ou, alternativement, pour permettre aux gaz d'échappement (72) de s'écouler le long du cheminement de re-circulation des gaz d'échappement (70, 71) ;
**caractérisé en ce que**
l'accélérateur (38) est situé en aval du dispositif de pressurisation (18) ;
le cheminement secondaire de fourniture d'air (62, 70) joint le dispositif de fourniture d'air (20) entre le dispositif de pressurisation (18) et l'accélérateur ou de la vanne d'étranglement (38).

2. Un moteur (2) selon la revendication 1, dans lequel la soupape de diversion (64) est une soupape à commande électronique et le moteur (2) comprend un dispositif de commande électronique (46) configuré pour commander ladite soupape (64) afin de contrôler l'écoulement (67) d'air pressurisé (68) depuis le dispositif de fourniture (20) vers le dispositif d'échappement des gaz (19).

3. Un moteur (2) selon la revendication 1 ou la revendication 2, dans lequel une portion du dispositif de fourniture d'air secondaire (60) fournit le cheminement de re-circulation des gaz d'échappement (70, 71), pour que les gaz d'échappement (72) puissent s'écouler depuis le dispositif d'échappement des gaz (19) jusqu'au dispositif de fourniture d'air (20), lorsque l'air pressurisé (68) ne s'écoule pas depuis le dispositif de fourniture d'air (20) jusqu'au dispositif d'échappement des gaz (19) au travers du dispositif de fourniture d'air secondaire (60).

4. Un moteur (2) selon l'une quelconque des revendications précédentes, dans lequel l'accélérateur est un accélérateur électronique (38) soumis au contrôle d'un dispositif de commande de moteur électronique (46).

5. Un moteur (2) selon l'une quelconque des revendications précédentes, dans lequel le dispositif de pressurisation est un compresseur de suralimentation entraîné par électricité.

6. Une méthode pour faire fonctionner un moteur (2), ledit moteur comprenant une ou davantage de chambres de combustion (4), un dispositif de fourniture d'air (20) incluant un dispositif de pressurisation (18) pour aspirer les chambres de combustion (4), un dispositif d'échappement des gaz (19) incluant un convertisseur catalytique (17) pour réduire les émissions du moteur, un dispositif de fourniture d'air secondaire (60) disposé entre le dispositif de fourniture d'air (20) et le dispositif d'échappement des gaz (19), un accélérateur (38) dans le dispositif de fourniture d'air (20) pour commander l'aspiration des chambres de combustion (4) et une soupape de diversion (64), la méthode comprenant les étapes de :
i) utiliser le dispositif d'échappement des gaz (19) pour acheminer les gaz d'échappement à l'écart des chambres de combustion (4) et au travers du convertisseur catalytique (17) ;
ii) utiliser le dispositif de pressurisation (18) pour pressuriser l'air fourni (6) aux chambres de combustion (4) par le dispositif de fourniture d'air (20) ;
iii) utiliser la soupape de diversion (64) pour permettre à l'air pressurisé (68) du dispositif de fourniture d'air (20) de s'écouler (67) dans le dispositif d'échappement des gaz (19) en amont du convertisseur catalytique (17) de manière à faciliter l'allumage catalytique et, en d'autres temps, utiliser la soupape de diversion (64) pour permettre aux gaz d'échappement (72) de s'écouler depuis le dispositif d'échappement des gaz (19) jusqu'au dispositif de fourniture d'air (20) ;
dans laquelle le moteur (2) comprend un accélérateur (38) dans le dispositif de fourniture d'air (20) pour commander l'aspiration des chambres de combustion (4), l'accélérateur (38) étant situé en aval du dispositif de pressurisation (18),
et **caractérisée en ce qu'**à l'étape iii) ledit air pressurisé quitte le dispositif de fourniture d'air entre le dispositif de pressurisation (18) et l'accélérateur (38), ainsi qu'en ce que lesdits gaz d'échappement (72) du dispositif d'échappement des gaz s'écoulent dans le dispositif de fourniture d'air (20) en aval de l'accélérateur (38).
